# EUROPÄISCHE PATENTSCHRIFT

(11) **EP 1 332 039 B1**
(45) Veröffentlichungstag und Bekanntmachung des Hinweises auf die Patenterteilung: **19.05.2004**
(21) Anmeldenummer: 01992637.7
(22) Anmeldetag: 30.10.2001
(51) Int. Cl.: B29C 67/00

(54) **VORRICHTUNG ZUM SINTERN, ABTRAGEN UND/ODER BESCHRIFTEN MITTELS ELEKTROMAGNETISCHER GEBÜNDELTER STRAHLUNG SOWIE VERFAHREN ZUM BETRIEB DER VORRICHTUNG**
DEVICE FOR SINTERING, REMOVING MATERIAL AND/OR LABELING BY MEANS OF ELECTROMAGNETICALLY BUNDLED RADIATION AND METHOD FOR OPERATING THE DEVICE
DISPOSITIF DE FRITTAGE, DE GRAVURE ET/OU D'ECRITURE PAR L'INTERMEDIAIRE DE RAYONNEMENT ELECTROMAGNETIQUE EN FAISCEAU ET PROCEDE D'UTILISATION DU DISPOSITIF

(30) Priorität: 30.10.2000 DE 10053742
(43) Veröffentlichungstag der Anmeldung: 06.08.2003
(73) Patentinhaber: Concept Laser GmbH, 96215 Lichtenfels (DE)
(72) Erfinder: HERZOG, Frank, 96215 Lichtenfels (DE); HERZOG, Kerstin, 96215 Lichtenfels (DE)
(74) Vertreter: Hafner, Dieter, Dr. Dipl.-Phys.
(86) Internationale Anmeldenummer: PCT/DE2001/004063
(87) Internationale Veröffentlichungsnummer: WO 2002/036331

(56) Entgegenhaltungen:
- DE-A- 19 533 960
- FR-A- 2 567 668

## Beschreibung

Die Erfindung betrifft eine Vorrichtung zum Sintern, Abtragen und/oder Beschriften mittels elektromagnetischer gebündelter Strahlung, insbesondere eine Laser-Sintermaschine und/oder Laser-Oberflächenbearbeitungsmaschine, die zur Durchführung stereolitographischer Bauverfahren geeignet ist. Eine aus DE 198 46 478 bekannte Laser-Sintermaschine weist ein Maschinengehäuse auf, in dem ein Bauraum untergebracht ist. Im oberen Bereich des Bauraums befindet sich ein Scanner, in den der Strahl eines Sinter-Lasers eingekoppelt wird. Unter dem Scanner ist eine höhenverfahrbare Werkstückplattform angeordnet, in deren Bereich eine Materialzuführungseinrichtung mit einem zur Zuführung von pulverartigem, pastosem oder flüssigem Sintermaterial aus einem Vorratsbehälter in den Prozeßbereich über der Werkstückplattform dienenden Beschichter vorgesehen ist.

Durch den Scanner wird der Fokus des Laserstrahls so über die auf der Werkstückplattform befindliche Sintermaterialschicht geführt, daß sich das Sintermaterial erhitzt, aufschmilzt und dadurch verfestigt.

Die bekannte Laser-Sintermaschine ist insofern nachteilig, als mit ihr großvolumige Bauteile nur schwer hergestellt werden können. Wird nämlich durch die bekannte Scannereinrichtung der Laserstrahl zu relativ weit auseinander liegenden Randbereichen geführt, kommt es zwangsläufig zu Veränderungen des Fokus und damit der einfallenden Energiedichte, so daß eine ausreichende Homogenität und Stabilität des gesinterten Materials im Randbereich relativ großer Werkstücke nicht mehr gewährleistet ist. Außerdem führen relativ große Strahlabweichungen im Randbereich stereolitographisch hergestellter Werkstücke zu Ungenauigkeiten. Dementsprechend treten auch beim Beschriften und Abtragen der Randbereiche durch den schräg einfallenden Laserstrahl Probleme auf.

Der Erfindung liegt die Aufgabe zugrunde, eine Vorrichtung zum Sintern, Abragen und/oder Beschriften mittels elektromagnetischer gebündelter Strahlung mit den weiteren Merkmalen des Oberbegriffes des Anspruches 1 derart auszubilden, daß mit ihr relativ großvolumige Bauteile hoher Präzision hergestellt, abgetragen und/oder beschriftet werden können. Diese Aufgabe wird durch die kennzeichnenden Merkmale des Anspruchs 1 gelöst, vorteilhafte Weiterbildungen ergeben sich aus den Unteransprüchen 2 - 13. Es ist darüber hinaus Aufgabe der Erfindung, ein Verfahren zum Betrieb einer Vorrichtung mit den Merkmalen des Anspruches 1 anzugeben, das großvolumige, hochgenaue und stabile Werkstücke hervorbringt, abträgt und/oder beschriftet. Diese Aufgabe wird durch die Verfahrensansprüche 14 ff. ebenfalls gelöst.

Als Kern der Erfindung wird es zunächst angesehen, im Gegensatz zu dem bekannten Stand der Technik den Scanner nicht fest im oberen Bereich des Bauraumes zu montieren, sondern an einem über der Werkstückplattform nach Art eines Kreuzschlittens motorisch verfahrbaren Scanner-Träger zu befestigen, wobei die motorischen Antriebselemente des Scanner-Trägers an einen Steuerungsrechner der Vorrichtung angeschlossen ist und von diesem während des Bauprozesses zur Bewegung des Scanners über der Werkstückplattform angesteuert werden. Damit ist es möglich, den Scanner im wesentlichen zentral über die gerade zu belichtende Bauzone zu verfahren und aus dieser zentralen Position über der Bauzone den Laserstrahl mit nur kleinen Winkelabweichungen von der Senkrechten durch die Scannerspiegel auf die Bauschicht zu lenken. Durch diese Maßnahme werden Fokusveränderungen weitgehend vermieden und die Bauqualität dadurch verbessert. Außerdem ist es möglich, die Bauschicht in Zonen aufzuteilen, die durch den Scanner-Träger angefahren werden können. Innerhalb der Zonen wird im wesentlichen durch die Ansteuerung des Scanners die Schicht mit dem Lasterstrahlfokus abgerastert.

Zusätzlich kann es vorteilhaft sein, wenn der Scanner-Träger über der Werkstückplattform höhenverfahrbar angeordnet ist. Dies ermöglicht zusätzliche Variationsmöglichkeiten betreffend die auf die Bauschicht auftreffende Energiedichte. Insbesondere besteht auch die Möglichkeit, bereits fertiggestellte Seitenbereiche noch einmal oberflächlich im Sinne einer Feinbearbeitung zu überarbeiten, d. h. z. B. Ungenauigkeiten abzutragen, Oberflächen durch weiteres Aufschmelzen zu verdichten und dergleichen, wobei beispielsweise durch den Scanner der Laserstrahl im wesentlichen horizontal abgelenkt wird, so daß er rechtwinklig auf eine sich vertikal erstreckende Bauteilseitenfläche fällt. Durch Auf- und Abbewegung mittels der Höhenverstellung des Werkstückträgers kann der Einfallswinkel des Laserstrahls auf der Oberfläche beibehalten und dennoch eine flächige Überarbeitung vorgenommen werden.

Die Ansprüche 3 - 8 betreffen Anordnungen des Lasers und insbesondere Merkmale betreffend die Strahlführung. Da abgesehen von der Verwendung eines Lichtleitelementes des Anspruchs 7 der Laserstrahl mehrfach an oder innerhalb der Kreuzschlittenanordnung umgelenkt werden muß und in einem Sinterbauraum durch Verdampfen von Sintermaterialpartikeln Verschmutzungen auftreten können, ist es zweckdienlich, die Strahlführung des Laserstrahls möglichst verdeckt zu gestalten. Dies gilt insbesondere auch hinsichtlich der Spiegel oder prismenartigen Umlenkelemente.

Sowohl die motorischen Antriebselemente als auch die Scannerspiegel können gesondert angesteuert werden. Damit wird es - wie oben bereits erwähnt - möglich, beispielsweise unter Beibehaltung eines Strahleinfallswinkels auf die zu bearbeitende Schicht oder Oberfläche entweder nur mit dem Kreuzschlittenantrieb zu arbeiten oder den Kreuzschlittenantrieb stehen zu lassen und eine sehr schnelle Flächenabrasterung durch Bewegung der Scannerspiegel vorzunehmen. Selbstverständlich sind auch Kombinationen beider Bewegungen möglich, beispielsweise dadurch, daß zur Abrasterung einer Fläche der motorische Kreuzschlittenantrieb langsam über die Fläche gefahren wird und über die Scannerspiegelablenkung stochastisch einzelne Zonen der Fläche abgerastert werden.

Es ist auch möglich, mit der Kreuzschlittenanordnung übergeordnete Grobrasterpunkte anzufahren, den Scanner-Träger über diesen Grobrasterpunkten stehen zu lassen und dann im Sinne einer Feinrasterung Unterzonen abzurastem.

Mit besonderem Vorteil kann am Scannerträger bzw. am Scanner ein Abstandssensor angeordnet sein, mittels welchem gleichzeitig während der Bearbeitung des Bauteils eine Abstandsmessung durchführbar ist. Eventuell auftretende Fehler können somit gleich während der Bearbeitung behoben werden. Die Abstandsmessung kann mittels sichtbarem Licht oder auch im Infrarotbereich erfolgen.

Vorteilhafterweise kann der Abstandssensor in der z-Achse verfahrbar sein. Indem der Abstandssensor auf dem Scannerträger und damit auf dem Kreuzschlittenantrieb angeordnet ist, ist die Verfahrbarkeit in der z-Achse einfach durchführbar. Nach der Bearbeitung der Bauteile kann damit eine Abstandsmessung durchgeführt werden, wobei der Meßabstand zum Bauteil mittels Verfahrens auf der z-Achse verkürzt werden kann, was zu präziseren Meßergebnissen führt. Natürlich kann die Abstandsmessung auch nach der Bearbeitung der Bauteile erfolgen.

Einzelheiten betreffend vorteilhafte Betriebsverfahren ergeben sich aus den Ansprüchen 15 - 25, wobei als ein Kernpunkt der Verfahren angesehen wird, daß eine Beaufschlagung der Bauschicht oder der zu überarbeitenden oder zu gravierenden Bauteiloberfläche der Einfallswinkel des Laserstrahls frei wählbar ist. Beim Bauprozeß kann mit im wesentlichen senkrechten Einfallswinkeln auf die Materialschicht gearbeitet werden, bei Überarbeitungsprozessen kann der Einfallswinkel des Laserstrahls beibehalten oder gezielt variiert werden, um eine Oberflächenbearbeitung beispielsweise auch in Hinterschneidungen, Aushöhlungen und dergleichen zu ermöglichen.

In vorteilhafter Weiterbildung der Erfindung ist es möglich, die Konturen der Bauschicht, d. h. den äußeren Rand, durch Bewegung der Antriebselemente der Kreuzschlittenanordnung abzufahren und abhängig von der Fahrgeschwindigkeit der Kreuzschlittenanordnung die Laserleistung und/oder die Energiedichte des Laserstrahls auf der Kontur zu steuern. Dies bedeutet, daß bei langsamen Verfahren die Laserleistung abgesenkt wird. Wenn die Kreuzschlittenanordnung schneller über die Konturlinien fährt, kann die Laserleistung und/oder die Energiedichte des Laserstrahls auf der Konturlinie hochgefahren werden. Ziel dieser Maßnahme ist eine möglichst konstante Beaufschlagung der Konturlinie mit Laserenergie unabhängig von der Fahrgeschwindigkeit der Kreuzschlittenanordnung.

Mit Anspruch 27 wird eine besonders vorteilhafte Maßnahme bei der Bestrahlung von Randbereichen von Bauteilen gelehrt, wobei Grundlage der Überlegung ist, daß die Kreuzschlittenanordnung mit einer relativ hohen Masse behaftet ist. Sollen nun die Ecken von Randbereichen, insbesondere von Konturen eines Werkstückes mit dem Laserstrahl abgefahren werden, so würde dies bedeuten, daß die Kreuzschlittenanordnung exakt in die Ecken geführt werden muß und dort beispielsweise recht- oder spitzwinklig umgelenkt werden muß - abhängig von der Eckkontur des Bauteils. Dabei treten hohe negative und positive Beschleunigungen auf, wenn man die Bestrahlung durch die Bewegung der Kreuzschlittenanordnung alleine vollziehen will.

Die Lehre des Anspruches 27 zielt nun darauf ab, daß die Bewegung der Kreuzschlittenanordnung gerundet innerhalb der Ecken erfolgt, d. h. die Ecke durch einen Radius abgekürzt wird, so daß der Scannerkopf, der fest auf der Kreuzschlittenanordnung befestigt ist, eine kontinuierliche, d. h. stetige Kurvenbewegung durchführen kann. Der Fokus des Laserstrahls wird durch gesonderte synchronisierte Nachführung der Scannerspiegel in die Ecken der Randbereiche geführt. Die Scannerspiegel haben eine weit geringere Masse als der gesamte Scannerkopf, weswegen dies ohne mechanische Belastung mit hoher Baugeschwindigkeit durchführbar ist.

Ein anderer Ansatz ergibt sich aus Anspruch 28. Dieser Anspruch lehrt, die Ecken von Randbereichen mit reduzierter Geschwindigkeit der Kreuzschlittenanordnung anzufahren und eine geschwindigkeitsabhängige Leistungs- oder Energiedichtesteuerung des Lasers auf der bestrahlenden Oberfläche vorzunehmen. Diese Maßnahme hat einen konstanten Energieeintrag in die Konturlinien des Bauteils zum Ziel.

Gemäß Anspruch 30 ist vorgesehen, mehrere Bauräume in einem Maschinengehäuse vorzusehen, wobei der eine nach eines Kreuzschlittens motorisch verfahrbare Scannerträger zwischen den Bauräumen verfahrbar ist, d. h. zwischen den Bauräumen hin- und herpendelt. Es können nicht nur zwei Bauräume nebeneinander in einem Maschinengehäuse vorgesehen sein, sondern z. B. in einer einem Quadrat angenäherten Anordnung vier Bauräume, die in beliebiger Reihenfolge abgefahren werden können, um parallel vier Bauteile im wesentlichen gleichzeitig in einer Maschine aufzubauen oder auf sonstige Weise zu bearbeiten, wie dies im Oberbegriff des Anspruches 1 vorgesehen ist. Dabei kann z. B. wie folgt vorgegangen werden:
- Bauraum 1: belichten
- Bauraum 2: beschichten
- Bauraum 3: Abkühlphase einer gerade belichteten Schicht
- Bauraum 4: Abkühlphase einer gerade abgetragenen Schicht

Selbstverständlich sind auch andere Vorgehensweisen möglich, beispielsweise daß in zwei nebeneinanderliegenden Bauräumen belichtet und in zwei anderen Bauräumen beschichtet wird.

Gemäß Anspruch 34 kann vorgesehen sein, dem Scannerträger eine Mehrfachfunktion zuzuordnen, nämlich ihn mit einem mechanischen oder elektromechanischen Universaltaster zu versehen, dessen Tastkopf geeignet ist, Bauteile zum Laserabtragen einzurichten oder vorgefertigte Bauteile in einem Bauraum so genau auszurichten, daß ein Aufbau auf vorhandenen Flächen durch ein Beschichtungsverfahren folgen kann.

Die Absaugung von Metalldämpfen, Rauch und Metallspritzern ist einerseits mit einer Verbesserung der Baustruktur verbunden, zum anderen führen Rauche in einer Baukammer auch immer zu einer Reduzierung der effektiven Laserleistung auf der Baufläche. Werden die Rauche gezielt, d. h. am Ort des Entstehens abgesaugt, kann neben einer Strukturverbesserung des Bauteils auch eine Erhöhung der Baugeschwindigkeit erzielt werden.

Anspruch 36 sieht eine gezielt Bedüsung der aufzuschmelzenden Metallpullver oder auch der abzutragenden Flächen mit Inertgas vor, das über die Absaugeinrichtung in unmittelbarer Nähe des Laserfokus abgesaugt werden kann.

Anspruch 37 sieht vor, am Scannerträger bzw. am Scanner einen Abstandssensor anzuordnen, mit welchem eine Abstandsmessung bereits während der Bearbeitung der Bauteile erfolgen kann. Ebenso ist es gemäß Anspruch 38 möglich, daß die Abstandsmessung erst oder zusätzlich nach der Bearbeitung der Bauteile erfolgt.

Die Erfindung ist anhand vorteilhafter Ausführungsbeispiele in den Zeichnungen näher erläutert. Diese zeigen
- Fig. 1: eine erste Ausführungsform der Strahlführung der Vorrichtung,
- Fig. 2: eine modifizierte Ausführungsform der Strahlführung mit flexiblem Lichtleitelement,
- Fig. 3: eine weitere Ausführungsform der Vorrichtung mit verfahrbarer Laserlichtquelle,

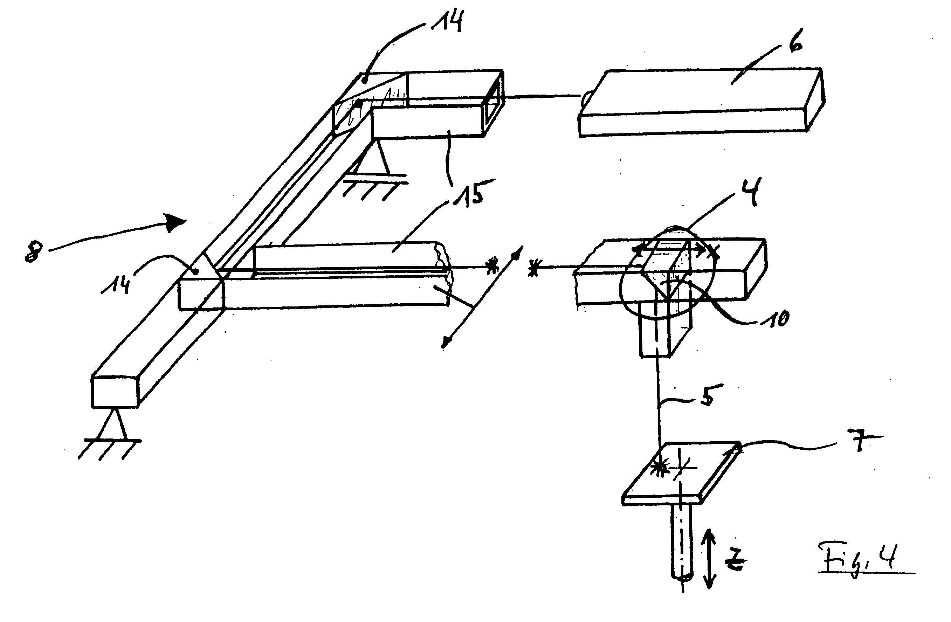

- Fig. 4: eine Ausführungsform mit verdeckter Strahlführung,

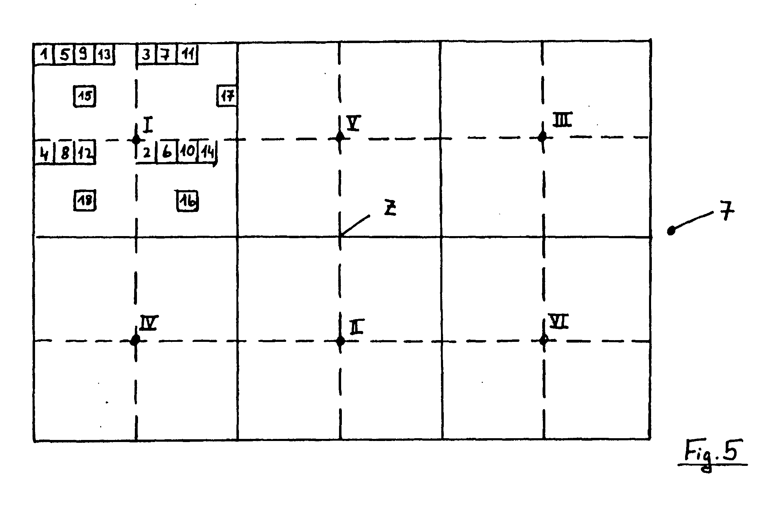

- Fig. 5: eine schematische Darstellung eines Abrasterprozesses einer Bauschicht unter Einsatz sowohl des Kreuzschlittenantriebes als auch des Scanners,
- Fig. 6: eine schematische Darstellung der Strahlführung und Bewegung der apparativen Komponenten bei einer Oberflächenbearbeitung.
- Fig. 7: eine schematische Darstellung der Führung des Scanners und des Laserfokus bei der Konturbestrahlung von Eckbereichen eines Bauteils.

Zunächst wird auf Zeichnungsfigur 1 Bezug genommen. Die dort schematisch dargestellte erfindungsgemäße Vorrichtung 1 weist ein durch Wandungen angedeutetes Maschinengehäuse 2 auf, in dem ein Bauraum 3 untergebracht ist. Im oberen Bereich des Bauraums 3 ist ein Scanner 4 angeordnet, in den der Strahl 5 eines Sinter-Lasers 6 eingekoppelt wird. Im unteren Bereich des Bauraums 3 sind eine höhenverfahrbare Werkstückplattform 7 sowie eine nicht näher dargestellte Materialzuführungseinrichtung vorgesehen, mit der pulverartiges oder auch pastoses oder flüssiges Sintermaterial aus einem nicht dargestellten Vorratsbehälter in den Prozeßbereich über der Werkstückplattform 7 transportiert werden kann.

Der Scanner 4 ist im oberen Bereich des Bauraums 3 beweglich an einem über der Werkstückplattform 7 motorisch verfahrbaren Scanner-Träger 8 angeordnet, wobei der Scanner-Träger 8 nach Art eines Kreuzschlittens 15 ausgebildet ist. Motorische Antriebselemente des Scanner-Trägers 8 sind an einen Steuerungsrechner 9 angeschlossen, der für den gesamten Prozeßablauf zuständig ist. Dieser Steuerungsrechner 9 steuert während des Bauprozesses sowohl die Bewegung des Scanners 4 über der Werkstückplattform 7 als auch die Bewegung des Scannerspiegels 10 im Gehäuse des Scanners 4. Neben einer möglichen Verschiebung des Scanners 4 entlang der x-Achse 11 und der y-Achse 12 ist auch eine Verschiebung des Scanners 4 entlang der z-Achse 13 möglich, wodurch der Scanner 4 über der Werkstückplattform 7 oder auch in daneben liegenden Bereichen höhenverfahrbar ist.

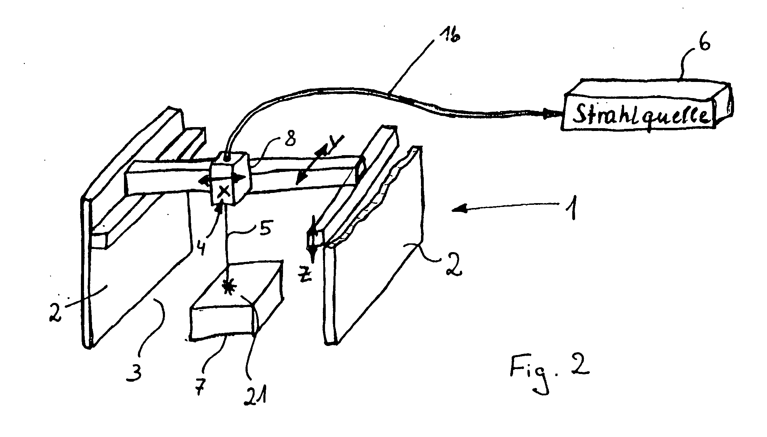

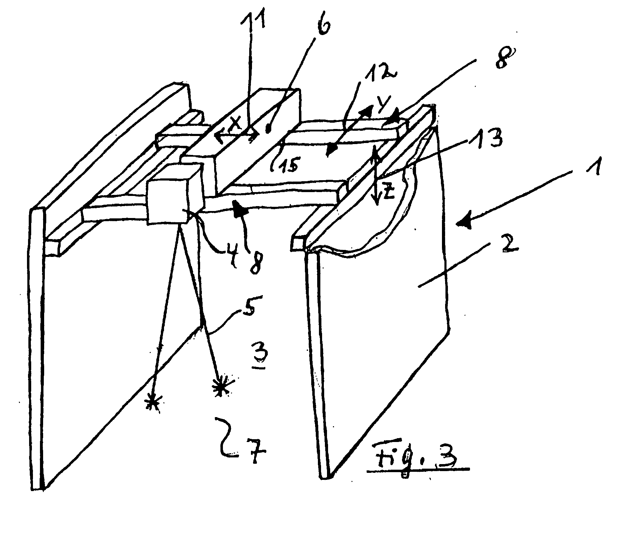

Die Einstrahlung des Strahls 5 des Sinter-Lasers 6 in den Bereich des Scanner-Trägers 8 erfolgt parallel zu den Achsen 11, 12 und 13 der Aufhängung des Scanner-Trägers 8 und über 90°-Ablenkspiegel 14 zum optischen Eingang des Scanners 4.
Bei dem in Zeichnungsfigur 1 dargestellten Ausführungsbeispiel ist der Sinter-Laser 6 am Maschinengestell bzw. dem Maschinengehäuse 2 befestigt. Es sind aber auch alternative Sinter-Laser-Anordnungen möglich, beispielsweise kann der Sinter-Laser 6 gemäß Fig. 3 an einem verfahrbaren Element der Kreuzschlittenanordnung 15, nämlich einem Querschlitten befestigt sein. Genauso gut ist es gemäß Fig. 2 möglich, daß der Ausgang des Sinter-Lasers 6 über ein flexibles Lichtleitelement 16 mit dem Scanner 4 verbunden ist.

Die Kreuzschlittenanordnung 15 des Scanner-Trägers 8 umfaßt rohr- oder stangenartige Trägerelemente, der Laserstrahl 5 ist zumindest abschnittsweise innerhalb dieser Trägerelemente geführt. Auch Umlenkelemente wie beispielsweise die 90°-Ablenkspiegel 14 befinden sich bei dem in Zeichnungsfigur 4 dargestellten Ausführungsbeispiel innerhalb der Trägerelemente.

Die Zeichnungsfiguren 5 und 6 dienen zur Erläuterung eines beispielhaften Betriebsverfahrens der Vorrichtung 1.

In Zeichnungsfigur 5 ist in Draufsicht auf die Werkstückplattform 7 eine Sintermaterialschicht dargestellt, die aus dem Vorratsbehälter über die Materialzuführungseinrichtung aufgetragen ist. Um diese Schicht zu verfestigen, wird elektromagnetische Strahlung in Form der Laserstrahlung auf die Schicht fokussiert, wodurch diese ganz oder teilweise aufgeschmolzen wird. Dabei wird verfahrensgemäß so vorgegangen, daß die Bauschicht durch den Prozeßrechner in eine Mehrzahl von Quadranten aufgeteilt wird, beim Ausführungsbeispiel sechs Quadranten. Zunächst wird das Zentrum I des ersten Quadranten angefahren und der Scanner über dem Zentrum I des ersten Quadranten fixiert. Dann wird der Scannerspiegel so angesteuert, daß beispielsweise in vier Unterquadranten die Bauzonen 1, 2, 3, 4, 5 usw. der Reihe nach abgescannt werden. Dadurch werden thermische Überbelastungen der Bauschicht vermieden. Es ist natürlich auch möglich, willkürlich in stochastischer Verteilung Kleinflächen 16, 17 und 18 anzufahren. Genauso gut kann vor Fertigstellung eines ersten Quadranten I auch ein anderer Quadrant, beispielsweise der Quadrant II ganz oder teilweise angefahren und aufgeschmolzen werden, falls dies aufgrund der Struktur des Werkstückes, thermischer Belastungen und dergleichen erforderlich und zweckdienlich erscheint. In vorteilhafter Weise werden dabei jedenfalls große Winkelabweichungen des Laserstrahls von der Senkrechten vermieden, die dann auftreten würden, wenn ein unbeweglicher Scannerkopf beispielsweise über dem Zentrum Z der Bauschicht angeordnet wäre.

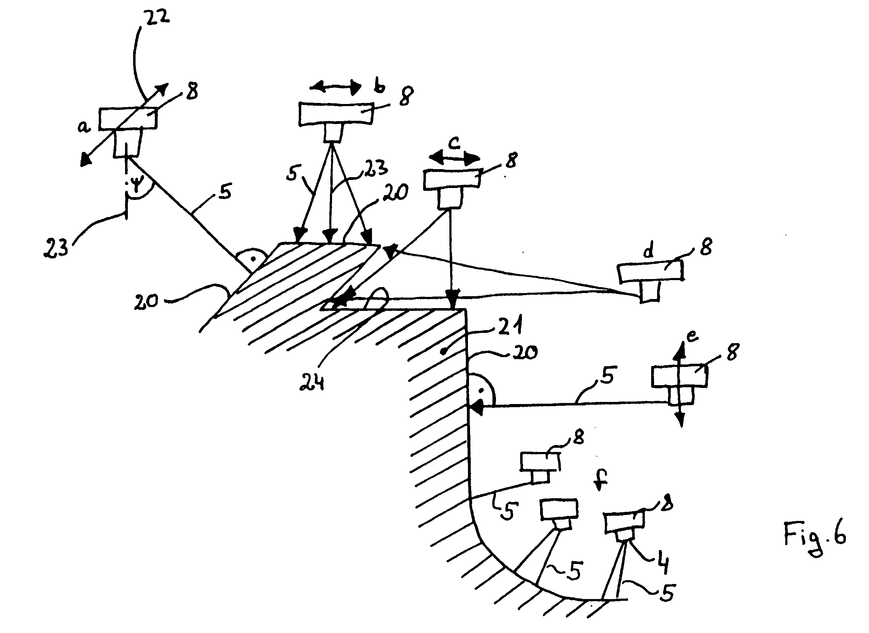

Fig. 6 zeigt in anschaulicher Weise, wie die Achsenverschiebbarkeit des Scanner-Trägers 8 dazu verwendet werden kann, die Oberflächen 20 eines bereits fertiggestellten Werkstückes 21 zu überarbeiten.

In Position a kann der Scanner-Träger 8 beispielsweise auf einer Bewegungsbahn 22 geführt werden, die parallel zu der bearbeitenden Oberfläche 20 verläuft. Der Ablenkwinkel ψ des Strahls 5 des Lasers von der Senkrechten 23 kann dabei konstant gehalten werden, so daß der Auftreffwinkel des Strahls 5 des Lasers auf der Oberfläche 20 immer rechtwinklig ist.

In Position b des Scanner-Trägers 8 ist es möglich, den Scanner-Träger 8 ebenfalls entweder parallel zu der zu bearbeitenden Oberfläche 20 zu bewegen oder auch durch Bewegung des Scannerspiegels 10 mit relativ kleinwinkligen Abweichungen des Strahls 5 von der Senkrechten 23 die Oberfläche 20 zu überarbeiten.

In Position c ist der Scanner-Träger 8 in eine abgesenkte Stellung gebracht und eröffnet damit die Möglichkeit, auch Hinterschneidungen 24 auszuleuchten, die ansonsten unter Umständen nicht erreichbar wären.

Gleiches gilt für Position d. In Position e beispielsweise kann der Strahl 5 des Lasers horizontal eingestellt bleiben, wobei sich der Scannerspiegel 10 nicht bewegt, durch Verfahren des Scanner-Trägers 8 parallel zu der Oberfläche 20, die der Position e gegenüberliegt, kann diese bearbeitet werden, wobei ebenfalls definierte Energiedichteverhältnisse vorherrschen, da der Strahl 5 des Lasers immer senkrecht auf die Oberfläche 20 trifft.

In den Positionen f, die im unteren Bereich der Fig. 6 dargestellt sind, ist es sogar möglich, den Scanner-Träger 8 einer gekrümmten Bewegungsbahn folgen zu lassen, die im wesentlichen parallel zu einer gekrümmten, zu überarbeitenden Werkstückoberfläche 20 angeordnet ist. Der Scanner 4 ist dann in der Lage, durch sukzessives Verstellen der Scannerspiegel 10 den Laserstrahl 5 immer senkrecht auf die Oberfläche 20 zu werfen, um die angestrebte Überarbeitungspräzision zu gewährleisten.

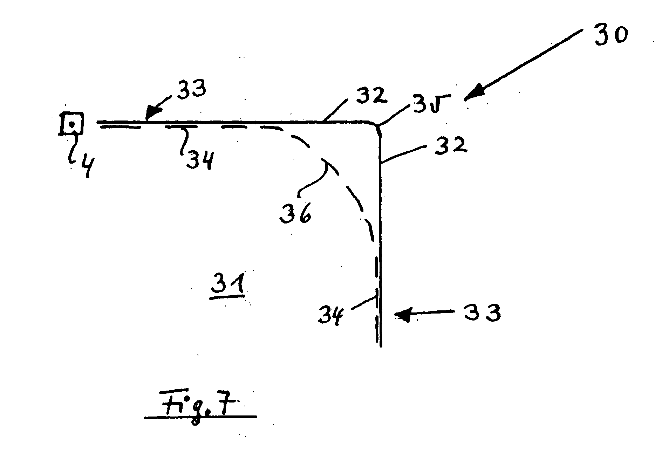

In Fig. 7 ist der Eckbereich 30 eines Werkstückes mit einer Werkstückoberfläche 31 zu sehen. Die Konturlinie 32 des Eckbereiches 30 soll nun von einem Laserstrahl nochmals abgefahren werden, um die Bauteilgenauigkeit zu erhöhen. In den geraden Bereichen 33 der Konturlinie folgt der Scanner 4 parallel er Konturlinie entlang der gestrichelten Linie 34, bevor er die Ekke 35 der Bauteiloberfläche 31 erreicht, biegt er auf eine abkürzende, gebogene Linie 36 ab, so daß der Scanner 4 zusammen mit dem Elementen der Kreuzschlittenanordnung eine stetige Bewegung durchführen kann. Der Radius der gebogenen Linie 36 kann in Kenntnis der baulichen Gegebenheiten der Elemente der Kreuzschlittenanordnung gewählt und optimiert werden.

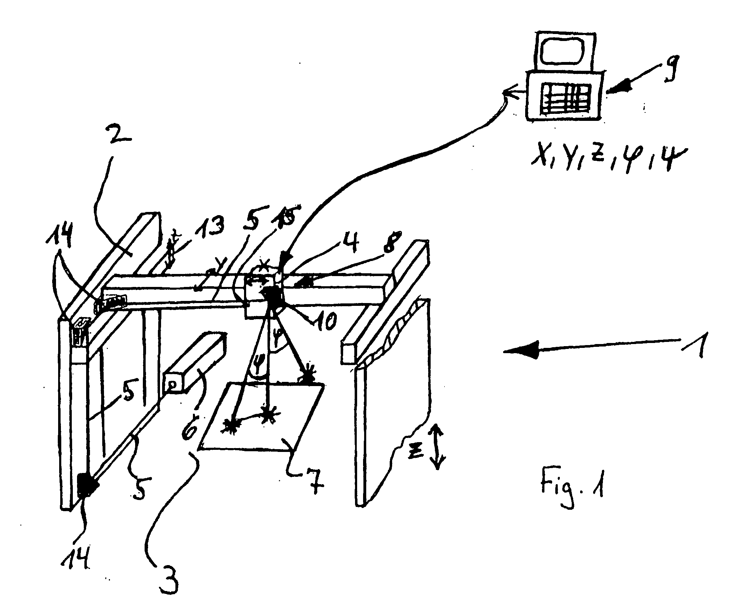

Ein Abstandssensor 37 ist am Scannerträger 8 angeordnet (siehe Fig. 1), mit welchem eine Abstandsmessung sowohl während der Bearbeitung des Werkstückes als auch nach der Bearbeitung des Werkstückes durchgeführt werden kann. Indem der Abstandsmesser 37 auf dem Scannerträger 8 angeordnet ist, ist dieser ebenfalls durch den Kreuzschlittenantrieb in seiner z-Achse verfahrbar. Damit ist es möglich, daß nach der Bearbeitung der Bauteile die Abstandsmessung mit einem geringeren Meßabstand durchgeführt werden kann, was zu genaueren Meßergebnissen führt.

## Patentansprüche

1. Vorrichtung zum Sintern, Abtragen und/oder Beschriften mittels elektromagnetischer gebündelter Strahlung, insbesondere Laser-Sintermaschine und/oder Laser-Oberflächenbearbeitungsmaschine, insbesondere zur Durchführung stereolitographischer Verfahren, mit einem in einem Maschinengehäuse (2) untergebrachten Bauraum (3), in welchem ein Scanner (4), in den der Strahl (5) eines Sinter-Lasers (6) eingekoppelt wird, eine höhenverfahrbare Werkstückplattform (7) sowie eine Materialzuführungseinrichtung mit einem zur Zuführung von pulverartigem, pastosem oder flüssigem Sinter-Material aus einem Vorratsbehälter in den Prozeßbereich über der Werkstückplattform dienendem Beschichter vorgesehen sind, der Scanner (4) an einem über der Werkstückplattform (7) nach Art eines Kreuzschlittens motorisch verfahrbaren Scanner-Träger (8) angeordnet ist, wobei motorische Antriebselemente des Scanner-Trägers (8) an einen Steuerungsrechner (9) der Vorrichtung (1) angeschlossen sind und von diesem während des Bauprozesses zur Bewegung des Scanners (4) über der Werkstückplattform (7) angesteuert werden,
**dadurch gekennzeichnet, daß**
mindestens zwei Laserlichtquellen unterschiedlicher Energie derart angeordnet sind, daß ihre Strahlen (5) durch den mindestens einen Scanner (4) auf die Werkstückoberfläche oder die zu sinternde Materialschicht geführt werden.

2. Vorrichtung nach Anspruch 1,
**dadurch gekennzeichnet, daß**
der Scanner-Träger (8) über der Werkstückplattform (7) höhenverfahrbar angeordnet ist.

3. Vorrichtung nach den Ansprüchen 1 oder 2,
**dadurch gekennzeichnet, daß**
die Einstrahlung des Strahls (5) des Sinter-Lasers (6) in den Bereich des Scanner-Trägers (8) parallel zu den Achsen (11-13) der Aufhängung des Scanner-Trägers (8) erfolgt und über 90°-Ablenkspiegel (14) zum optischen Eingang des Scanners (4) geführt wird.

4. Vorrichtung nach einem der vorhergehenden Ansprüche,
**dadurch gekennzeichnet, daß**
der Sinter-Laser (6) ortsfest an einem mit einer Kreuzschlittenanordnung (15) der Aufhängung verbundenen Maschinengestell befestigt ist.

5. Vorrichtung nach einem der vorhergehenden Ansprüche,
**dadurch gekennzeichnet, daß**
der Sinter-Laser (6) parallel zu einer Achse (12) der Kreuzschlittenanordnung (15) verfahrbar ist.

6. Vorrichtung nach Anspruch 5,
**dadurch gekennzeichnet, daß**
der Sinter-Laser (6) an einem verfahrbaren Element der Kreuzschlittenanordnung (15) befestigt ist.

7. Vorrichtung nach einem der vorhergehenden Ansprüche,
**dadurch gekennzeichnet, daß**
der Sinter-Laser (6) über ein flexibles Lichtleitelement (16) mit dem Scanner (4) verbunden ist.

8. Vorrichtung nach einem der vorhergehenden Ansprüche,
**dadurch gekennzeichnet, daß**
die Kreuzschlittenanordnung (15) des Scanner-Trägers (8) rohr- oder stangenartige Trägerelemente umfaßt und der Laserstrahl (5) zumindest abschnittsweise innerhalb der Trägerelemente geführt und/oder umgelenkt ist.

9. Vorrichtung nach einem der vorhergehenden Ansprüche,
**dadurch gekennzeichnet, daß**
der Steuerungsrechner (9) der Vorrichtung (1) zur gesonderten Ansteuerung der motorischen Antriebselemente der Kreuzschlittenanordnung (15) und der Scannerspiegel (10) ausgebildet ist.

10. Vorrichtung nach einem der vorhergehenden Ansprüche,
**dadurch gekennzeichnet, daß**
an dem Scanner-Träger (8) zwei Scanner (4, 4') angeordnet sind, wobei jedem Scanner (4, 4') eine Laserlichtquelle zugeordnet ist.

11. Vorrichtung nach einem der vorhergehenden Ansprüche,
**dadurch gekennzeichnet, daß**
die neben dem Sinter-Laser (6) vorhandene weitere Laserlichtquelle mit einer im wesentlichen starren optischen Umlenkvorrichtung zusammenwirkt, die am Scanner-Träger (8) befestigt ist und den in sie einfallenden Strahl (5) senkrecht nach unten ablenkt.

12. Vorrichtung nach einem der vorhergehenden Ansprüche,
**dadurch gekennzeichnet, daß**
am Scanner-Träger (8) bzw. am Scanner (4) ein Abstandssensor (37) angeordnet ist.

13. Vorrichtung nach Anspruch 12,
**dadurch gekennzeichnet, daß**
der Abstandssensor (37) in der z-Achse verfahrbar ist.

14. Verfahren zum Betrieb einer Vorrichtung mit den Merkmalen des Anspruches 1,
**dadurch gekennzeichnet, daß**
- im Randbereich großvolumiger Werkstücke liegende Bauzonen beim Bauprozeß derart vom Scanner-Träger angefahren werden, daß der Scanner den Laserstrahl beim Bauprozeß bezogen auf die Senkrechtachse nur mit relativ kleinen Winkeln ablenkt,
- durch den Steuerungsrechner jede zu sinternde Werkstückschicht in Bauzonen aufgeteilt wird und der Scanner beim Belichtungsprozeß durch die Kreuzschlittenanordnung über die jeweilige Bauzone gefahren wird und die innerhalb der Bauzone erforderliche Strahlablenkung durch Bewegung des Scannerspiegels erfolgt, und
- die sequentielle Bestrahlung der Bauzonen mit elektromagnetischer Strahlung (Laserlicht) derart erfolgt, daß die Vielzahl der Bauzonen in stochastischer Abfolge nacheinander angefahren werden.

15. Verfahren nach Anspruch 14,
**dadurch gekennzeichnet, daß**
die Randbereiche der einzelnen Bauzonen sich überlagern.

16. Verfahren nach einem der Ansprüche 14 oder 15,
**dadurch gekennzeichnet, daß**
die Randbereiche der einzelnen Bauzonen gesondert mit Laserlicht beaufschlagt werden.

17. Verfahren nach Anspruch 16,
**dadurch gekennzeichnet, daß**
die gesonderte Beaufschlagung der Randbereiche mit Laserlicht durch Bewegung der Kreuzschlittenanordnung bei Stillstand der Scannerspiegel, insbesondere mit senkrecht auf die zu sinternde Materialschicht einfallendem Laserstrahl erfolgt.

18. Verfahren nach einem der vorhergehenden Ansprüche 14 - 17,
**dadurch gekennzeichnet, daß**
Werkstückoberflächen oder innerhalb des Werkstückes verlaufende Kanal- oder Innenraumoberflächen mit im wesentlichen senkrecht auf die Bauschicht oder Oberfläche auftreffendem Laserlicht nachbestrahlt werden.

19. Verfahren nach Anspruch 18,
**dadurch gekennzeichnet, daß**
bei der Nachbestrahlung eine Verdichtung und/oder Glättung der Oberflächen erfolgt.

20. Verfahren nach einem der vorhergehenden Ansprüche 14 - 19,
**dadurch gekennzeichnet, daß**
durch den senkrecht auftreffenden und damit genau definierten Laserstrahlfokus eine Feinbearbeitung der Oberflächen des Werkstückes erfolgt.

21. Verfahren nach Anspruch 20,
**dadurch gekennzeichnet, daß**
bei der Feinbearbeitung ausschließlich die Antriebselemente der Kreuzschlittenanordnung angetrieben werden und der Auftreffwinkel des Laserstrahls auf die Bauschicht unverändert beibehalten wird.

22. Verfahren nach einem der vorhergehenden Ansprüche 14 - 21,
**dadurch gekennzeichnet, daß**
der Fokus des aus dem mindestens einen Scanner und/oder der optischen Ablenkvorrichtung austretenden Laserstrahls zur gezielten Veränderung der auf die Bauschicht und/oder Oberfläche auftreffenden Energiedichte während des Bau- oder Bearbeirungsvorganges verstellt wird, wozu motorisch über dem Prozeßrechner verstellbare Fokusierungselemente vorgesehen sind.

23. Verfahren nach einem der vorhergehenden Ansprüche 14 - 22,
**dadurch gekennzeichnet, daß**
die Konturen der Bauschicht durch Bewegung der Antriebselemente der Kreuzschlittenanordnung abgefahren werden, wobei abhängig von der Fahrgeschwindigkeit der Kreuzschlinenanordnung die Laserleistung und/oder die Energiedichte des Laserstrahls auf der Kontur gesteuert wird.

24. Verfahren nach einem der vorhergehenden Ansprüche 16 oder 17,
**dadurch gekennzeichnet, daß**
bei Bestrahlung von Ecken der Randbereiche die Bewegung der Kreuzschlittenanordnung gerundet innerhalb der Ecken erfolgt, so daß der Scanner eine kontinuierliche Kurven-Bewegung durchführen kann und der Fokus des Laserstrahles durch gesonderte, synchronisierte Nachführung der Scannerspiegel in die Ecken der Randbereiche geführt wird.

25. Verfahren nach Anspruch 17,
**dadurch gekennzeichnet, daß**
Ecken von Randbereichen mit reduzierter Geschwindigkeit der Kreuzschlittenanordnung angefahren werden und eine geschwindigkeitsabhängige Leistungssteuerung und/oder Energiedichtesteuerung des Lasers auf der zu bestrahlenden Oberfläche erfolgt.

26. Verfahren zum Betrieb einer Vorrichtung mit den Merkmalen des Anspruches 1,
**gekennzeichnet durch**
synchron gesteuerte Bewegung der Kreuzschlittenanordnung und der Scannerspiegel bei Belichtung von Bauteilkonturen und Bauteilflächen.

27. Verfahren zum Betrieb einer Vorrichtung mit den Merkmalen des Anspruches 1,
**gekennzeichnet durch**
Vorsehen mehrerer Bauräume in einem Maschinengehäuse, wobei der nach Art eines Kreuzschlittens motorisch verfahrbare Scannerträger zwischen den Bauräumen verfahrbar ist.

28. Verfahren nach Anspruch 27,
**dadurch gekennzeichnet, daß**
die Materialzuführungseinrichtung ebenfalls motorisch über die mehreren Bauräurne verfahrbar ist.

29. Verfahren nach einem der vorhergehenden Ansprüche 27 oder 28,
**dadurch gekennzeichnet, daß**
eine Mehrzahl von Materialzuführungseinrichtungen vorgesehen ist, wobei jeweils eine Materialzuführungseinrichtung einem Bauraum zugeordnet ist.

30. Verfahren nach einem der vorhergehenden Ansprüche 27 - 29,
**dadurch gekennzeichnet, daß**
das Beschichten einer Bauoberfläche in einem Bauraum gleichzeitig mit dem Belichten durch den Laser in einem anderen Bauraum erfolgt.

31. Verfahren zum Betrieb einer Vorrichtung mit den Merkmalen des Anspruches 1,
**dadurch gekennzeichnet, daß**
der Scannerträger einen mechanischen oder elektromechanischen Universaltaster trägt, dessen Tastkopf zur hochpräzisen Einrichtung von Bauteilen beim Laserabtragen und/oder für die Einrichtung von vorgefertigten Bauteilen in einem Bauraum dient.

32. Verfahren zum Betrieb einer Vorrichtung mit den Merkmalen des Anspruches 1,
**gekennzeichnet durch**
Absaugen von Metalldämpfen, Rauch und Metallspritzern während des Laserbetriebes **durch** ein insbesondere ringartiges Absaugelement am Scannerträger, wobei der Absaugbereich in unmittelbarer Umgebung des Laserfokus auf der Bauteiloberfläche nachgeführt wird.

33. Verfahren zum Betrieb einer Vorrichtung mit den Merkmalen des Anspruches 1,
**gekennzeichnet durch**
Bedüsen der aufzuschmelzenden Metallpullver mit Inertgas, das über eine Bedüsungseinrichtung am Scannerträger in unmittelbarer Nähe des Laserfokus zugeführt und über die Absaugeinrichtung in unmittelbarer Umgebung des Laserfokus abgesaugt wird.

34. Verfahren zum Betrieb einer Vorrichtung mit den Merkmalen des Anspruches 1,
**dadurch gekennzeichnet, daß**
am Scanner-Träger (8) bzw. am Scanner (4) eine Abstandssensor (37) angeordnet ist, mit welchem eine Abstandsmessung während der Bearbeitung der Bauteile erfolgt.

35. Verfahren zum Betrieb einer Vorrichtung mit den Merkmalen des Anspruches 1,
**dadurch gekennzeichnet, daß**
am Scanner-Träger (8) bzw. am Scanner (4) ein Abstandssensor (37) angeordnet ist, mit welchem eine Abstandsmessung nach der Bearbeitung der Bauteile erfolgt.

## Claims

1. Device for sintering, ablating and/or inscribing by means of electromagnetic focused radiation, in particular a laser sintering machine and/or laser surface processing machine, in particular for carrying out stereolithographic methods, having a forming chamber (3) which is accommodated in a machine housing (2) and in which there are provided a scanner (4), into which the beam (5) of a sintering laser (6) is coupled, a height-adjustable workpiece platform (7) and a material feed device with a coater which serves to feed pulverulent, pasty or liquid sintering material from a reservoir into the process area via the workpiece platform, the scanner (4) being arranged on a scanner carrier (8) which can be moved by motor over the workpiece platform (7) in the manner of a cross-slide, motorized drive elements of the scanner carrier (8) being connected to a control computer (9) of the device (1), and being driven by the said computer during the forming process in order to move the scanner (4) over the workpiece platform (7), **characterized in that** at least two laser light sources of different energy are arranged in such a way that their beams (5) are guided by the at least one scanner (4) onto the workpiece surface or the material layer to be sintered.

2. Device according to Claim 1,
**characterized in that**
the scanner carrier (8) is arranged in a height adjustable fashion over the workpiece platform (7).

3. Device according to Claims 1 or 2,
**characterized in that**
the irradiation of the beam (5) of the sintering laser (6) into the region of the scanner carrier (8) is performed parallel to the axes (11-13) of the suspension of the scanner carrier (8), and is guided to the optical input of the scanner (4) via 90° deflecting mirrors (14).

4. Device according to one of the preceding claims,
**characterized in that**
the sintering laser (6) is fastened fixedly on a machine frame connected to a cross-slide arrangement (15) of the suspension.

5. Device according to one of the preceding claims,
**characterized in that**
the sintering laser (6) can be moved parallel to an axis (12) of the cross-slide arrangement (15).

6. Device according to Claim 5,
**characterized in that**
the sintering laser (6) is fastened on a movable element of the cross-slide arrangement (15).

7. Device according to one of the preceding claims,
**characterized in that**
the sintering laser (6) is connected to the scanner (4) via a flexible light-guiding element (16).

8. Device according to one of the preceding claims,
**characterized in that**
the cross-slide arrangement (15) of the scanner carrier (8) comprises tubular or pole-like carrier elements, and the laser beam (5) is guided and/or deflected at least partially inside the carrier elements.

9. Device according to one of the preceding claims,
**characterized in that**
the control computer (9) of the device (1) is designed for separately driving the motorized drive elements of the cross-slide arrangement (15) and of the scanner mirrors (10).

10. Device according to one of the preceding claims,
**characterized in that**
two scanners (4, 4') are arranged on the scanner carrier (8), each scanner (4, 4') being assigned a laser light source.

11. Device according to one of the preceding claims,
**characterized in that**
the further laser light source present in addition to the sintering laser (6) cooperates with a substantially rigid optical deflecting device which is fastened on the scanner carrier (8) and deflects vertically downwards the beam (5) impinging into it.

12. Device according to one of the preceding claims,
**characterized in that**
a distance sensor (37) is arranged on the scanner carrier (8) or on the scanner (4).

13. Device according to Claim 12,
**characterized in that**
the distance sensor (37) can be moved along the z-axis.

14. Method for operating a device having the features of Claim 1,
**characterized in that**
- during the forming process forming zones situated in the edge region of voluminous workpieces are approached by the scanner carrier in such a way that during the forming process the scanner deflects the laser beam only by relatively small angles with reference to the vertical axis,
- the control computer splits each workpiece layer to be sintered into forming zones, and during the exposure process the scanner is moved by the cross-slide arrangement over the respective forming zone, and the beam deflection required inside the forming zone is performed by moving the scanner mirror, and
- the sequential irradiation of the forming zones with electromagnetic radiation (laser light) is performed in such a way that the multiplicity of the forming zones are approached one after another in stochastic sequence.

15. Method according to Claim 14,
**characterized in that**
the edge regions of the individual forming zones overlap one another.

16. Method according to one of Claims 14 or 15,
**characterized in that**
laser light is applied separately to the edge regions of the individual forming zones.

17. Method according to Claim 16,
**characterized in that**
laser light is applied separately to the edge regions by moving the cross-slide arrangement with the scanner mirrors stationary, in particular with the laser beam impinging at right angles upon the material layer to be sintered.

18. Method according to one of the preceding Claims 14 - 17,
**characterized in that**
laser light striking the forming layer or surface in substantially perpendicular fashion is subsequently used to irradiate workpiece surfaces or canal surfaces or interior surfaces running inside the workpiece.

19. Method according to Claim 18,
**characterized in that**
the surfaces are compacted and/or smoothed during the subsequent irradiation.

20. Method according to one of the preceding Claims 14 - 19,
**characterized in that**
fine processing of the surfaces of the workpiece results from the vertically striking, and thus accurately defined laser beam focus.

21. Method according to Claim 20,
**characterized in that**
only the drive elements of the cross-slide arrangement are driven during the fine processing, and the angle of impingement of the laser beam on the forming layer is maintained unchanged.

22. Method according to one of the preceding Claims 14 - 21,
**characterized in that**
the focus of the laser beam emerging from the at least one scanner and/or the optical deflecting device is adjusted for the targeted variation of the energy density striking the forming layer and/or surface during the forming or processing operation, for which purpose focusing elements are provided which can be adjusted by motor via the process computer.

23. Method according to one of the preceding Claims 14 - 22,
**characterized in that**
the contours of the forming layer are traced by moving the drive elements of the cross-slide arrangement, the laser power and/or the energy density of the laser beam on the contour being controlled as a function of the travelling speed of the cross-slide arrangement.

24. Method according to one of the preceding Claims 16 or 17,
**characterized in that**
during irradiation of corners of the edge regions the cross-slide arrangement is moved in a rounded fashion inside the corners such that the scanner can carry out a continuous curved movement, and the focus of the laser beam is guided into the corners of the edge regions by separate, synchronized tracking of the scanner mirrors.

25. Method according to Claim 17,
**characterized in that**
corners of edge regions are approached with a reduced speed of the cross-slide arrangement, and the power and/or energy density of the laser are/is controlled on the surface to be irradiated as a function of speed.

26. Method for operating a device having the features of Claim 1,
**characterized by**
synchronously controlled movement of the cross-slide arrangement and of the scanner mirrors during exposure of component contours and component surfaces.

27. Method for operating a device having the features of Claim 1,
**characterized by**
provision of several forming chambers in a machine housing, it being possible for the scanner carrier, which can be moved by motor in the manner of a cross-slide, to be moved between the forming chambers.

28. Method according to Claim 27,
**characterized in that**
the material feed device can likewise be moved by motor over the several forming chambers.

29. Method according to one of the preceding Claims 27 to 28,
**characterized in that**
a plurality of material feed devices are provided, one material feed device each being assigned to a forming chamber.

30. Method according to one of the preceding Claims 27 - 29,
**characterized in that**
the coating of a forming surface in a forming chamber is performed simultaneously with the exposure by the laser in another forming chamber.

31. Method for operating a device having the features of Claim 1,
**characterized in that**
the scanner carrier carries a mechanical or electromechanical universal probe whose probe head serves the purpose of setting up components with high precision during laser ablation, and/or serves for setting up prefabricated components in a forming chamber.

32. Method for operating a device having the features of Claim 1,
**characterized by**
the extraction of metal vapours, smoke and metal splashes during the laser operation by means of an, in particular, annular extraction element on the scanner carrier, the extraction region being tracked in the immediate surroundings of the laser focus on the component surface.

33. Method for operating a device having the features of Claim 1,
**characterized by**
spraying the metal powder to be fused with inert gas which is fed via a spraying device on the scanner carrier in the immediate vicinity of the laser focus and is extracted via the extraction device in the immediate surroundings of the laser focus.

34. Method for operating a device having the features of Claim 1,
**characterized in that**
arranged on the scanner carrier (8) or on the scanner (4) is a distance sensor (37) which is used to perform a distance measurement during the processing of the components.

35. Method for operating a device having the features of Claim 1,
**characterized in that**
arranged on the scanner carrier (8) or on the scanner (4) is a distance sensor (37) which is used to perform a distance measurement after the processing of the components.

## Revendications

1. Dispositif de frittage, de gravure et/ou d'écriture, à l'aide d'un rayonnement électromagnétique focalisé, en particulier machine de frittage au laser et/ou machine de traitement de surface au laser, en particulier pour mettre en oeuvre des procédés stéréolithographiques, avec une enceinte de construction (3), logée dans un boîtier de machine (2), dans laquelle sont prévus un scanneur (4), dans lequel est couplé le rayon (5) d'un laser de frittage (6), une plate-forme de pièce d'oeuvre (7) déplaçable en hauteur, ainsi qu'un dispositif d'alimentation en matériau, avec un enducteur servant à l'amenée d'un matériau de frittage pulvérulent, pâteux ou liquide, issu d'un réservoir de stockage, dans la zone de processus, au-dessus de la plate-forme de pièce d'oeuvre, le scanneur (4) est disposé sur un support de scanneur (8) déplaçable de façon motorisée, à la façon d'un chariot à mouvements croisés, au-dessus de la plate-forme de pièce d'oeuvre (7), des éléments d'entraînement motorisés du support de scanneur (8) étant raccordés à un ordinateur de commande (9) du dispositif (1) et commandés par celui-ci, pendant le processus de construction, afin de déplacer le scanneur (4) au-dessus de la plate-forme de pièce d'oeuvre (7),
**caractérisé en ce qu'**au moins deux sources de lumière laser d'énergie différente sont disposées de manière que leurs rayons (5) soient guidés au moyen du au moins un scanneur (1) sur la surface de pièce d'oeuvre ou sur la couche de matériau à fritter.

2. Dispositif selon la revendication 1, **caractérisé en ce que** le support de scanneur (8) est disposé de façon à être déplaçable en hauteur, au-dessus de la plate-forme de pièce d'oeuvre (7).

3. Dispositif selon les revendications 1 ou 2, **caractérisé en ce que** la radiation incidente du rayon (5) du laser de frittage (6), s'effectue dans la zone du support de scanneur (8), parallèlement aux axes (11 - 13) de la suspension du support de scanneur (8) et est guidée, par l'intermédiaire de miroirs de renvoi à 90° (14) vers l'entrée optique du scanneur (4).

4. Dispositif selon l'une des revendications précédentes, **caractérisé en ce que** le laser de frittage (6) est fixé de façon fixe sur un bâti machine, relié à un dispositif à chariot à mouvements croisés (15) de la suspension.

5. Dispositif selon l'une des revendications précédentes, **caractérisé en ce que** le laser de frittage (6) est déplaçable parallèlement à un axe (12) du dispositif à chariot à mouvements croisés (15).

6. Dispositif selon la revendication 5, **caractérisé en ce que** le laser de frittage (6) est fixé à un élément déplaçable du dispositif à chariot à mouvements croisés (15).

7. Dispositif selon l'une des revendications précédentes, **caractérisé en ce que** le laser de frittage (6) est relié au scanneur (4) par l'intermédiaire d'un élément de guidage de lumière (16) flexible.

8. Dispositif selon l'une des revendications précédentes, **caractérisé en ce que** le dispositif à chariot à mouvements croisés (15) du support de scanneur (8) comprend des éléments supports, de nature tubulaire ou sous forme de barres, et le rayon laser (5) est guidé et/ou dévié, au moins par tronçons, à l'intérieur des éléments supports.

9. Dispositif selon l'une des revendications précédentes, **caractérisé en ce que** l'ordinateur de commande (9) du dispositif (1) est réalisé pour la commande séparée des éléments d'entraînement motorisés du dispositif à chariot à mouvements croisés (15) et des miroirs de scanneur (10).

10. Dispositif selon l'une des revendications précédentes, **caractérisé en ce que**, sur le support de scanneur (8), sont disposés deux scanneurs (4, 4'), à chaque scanneur (4, 4') étant associée une source de lumière laser.

11. Dispositif selon l'une des revendications précédentes, **caractérisé en ce que** la source de lumière laser supplémentaire, existant à côté du laser de frittage (6), coopère avec un dispositif de renvoi optique, essentiellement rigide, fixé sur le support de scanneur (8) et déviant perpendiculairement, vers le bas, le rayon (5) incident en lui.

12. Dispositif selon l'une des revendications précédentes, **caractérisé en ce qu'**un capteur d'espacement (37) est disposé sur le support de scanneur (8), respectivement sur le scanneur (4).

13. Dispositif selon la revendication 12, **caractérisé en ce que** le capteur d'espacement (37) est déplaçable dans l'axe z.

14. Procédé de fonctionnement d'un dispositif présentant les caractéristiques de la revendication 1,
**caractérisé en ce que**
- des zones de construction, situées dans la zone de bordure de pièces d'oeuvre de gros volume, sont approchées, lors du processus de construction, par le support de scanneur, de manière que, lors du processus de construction, le scanneur dévie le rayon laser, uniquement avec des angles relativement petits par rapport à l'axe perpendiculaire,
- au moyen de l'ordinateur de commande, chaque couche de pièce d'oeuvre à fritter est subdivisée en zones de construction et le scanneur, lors du processus d'illumination, est passé sur la zone de construction respective, au moyen du dispositif à chariot à mouvements croisés, et la déviation du rayon, nécessaire à l'intérieur de la zone de construction, se faisant par un déplacement du miroir de scanneur, et
- l'irradiation séquentielle des zones de construction, avec un rayonnement électromagnétique (lumière laser), se fait de manière que la pluralité des zones de construction soient approchées les unes après les autres, suivant un ordre de succession stochastique.

15. Procédé selon la revendication 14, **caractérisé en ce que** les zones de bordure des différentes zones de construction se chevauchent.

16. Procédé selon l'une des revendications 14 ou 15, **caractérisé en ce que** les zones de bordures des différentes zones de construction sont sollicitées séparément par de la lumière laser.

17. Procédé selon la revendication 16, **caractérisé en ce que** la sollicitation séparée des zones de bordure par de la lumière laser se fait par un déplacement du dispositif à chariot à mouvements croisés, lorsque les miroirs de scanneur sont immobilisés, en particulier avec un rayon-laser incident, arrivant perpendiculairement sur la couche de matériau à fritter.

18. Procédé selon l'une des revendications précédentes 14-17, **caractérisé en ce que** des surfaces de pièce d'oeuvre ou des surfaces de canal ou d'espace intérieur, s'étendant à l'intérieur de la pièce d'oeuvre, sont soumises à une post-irradiation, avec une lumière laser arrivant sensiblement perpendiculairement sur la couche de construction ou sur la surface.

19. Procédé selon la revendication 18, **caractérisé en ce que**, lors de la post-irradiation, s'effectue un compactage et/ou un lissage des surfaces.

20. Procédé selon l'une des revendications précédentes 14 - 19, **caractérisé en ce qu'**un usinage fin des surfaces de la pièce d'oeuvre s'effectue au moyen de la focalisation du rayon laser, arrivant perpendiculairement et ainsi défini précisément.

21. Procédé selon la revendication 20, **caractérisé en ce que**, lors de l'usinage fin, on entraîne exclusivement les éléments d'entraînement du dispositif à chariot à mouvements croisés et l'angle d'incidence du rayon laser, sur la couche de construction est conservé, inchangé.

22. Procédé selon l'une des revendications précédentes 14 - 21, **caractérisé en ce que** le foyer du rayon laser, sortant du au moins un scanneur et/ou du dispositif de déviation optique, est réglé pendant le processus de construction ou d'usinage, dans le but d'une modification, effectuée à dessein, de la densité d'énergie arrivant sur la couche de construction et/ou sur la surface, ce pourquoi des éléments de focalisation, réglables par moteur, par l'intermédiaire de l'ordinateur de processus, sont prévus.

23. Procédé selon l'une des revendications précédentes 14 - 22, **caractérisé en ce que** les contours de la couche de construction sont parcourus par un déplacement des éléments d'entraînement du dispositif à chariot à mouvements croisés, sachant que, en fonction de la vitesse de déplacement du dispositif à chariot à mouvements croisés, la puissance laser et/ou la densité d'énergie du rayon laser, sur le contour, est/sont commandée(s).

24. Procédé selon l'une des revendications précédentes 16 ou 17, **caractérisé en ce que**, en cas d'irradiation d'angles des zones de bordure, le déplacement du dispositif à chariot à mouvements croisés se fait en effectuant un arrondi à l'intérieur des angles, de sorte que le scanneur puisse effectuer un déplacement continu sur des courbes et que le foyer du rayon-laser soit guidé dans les angles des zones de bordure, au moyen d'une commande de poursuite synchronisée, séparée, imposée aux miroirs de scanneur.

25. Procédé selon la revendication 17, **caractérisé en ce que** des angles de zones de bordure sont passés à vitesse réduite du dispositif à chariot à mouvements croisés et une commande de puissance et/ou une commande de densité d'énergie, dépendant de la vitesse, du laser, sur la surface à irradier, s'effectue(nt).

26. Procédé de fonctionnement d'un dispositif présentant les caractéristiques de la revendication 1, **caractérisé par** un déplacement, commandé de façon synchrone, du dispositif à chariots à mouvements croisés et des miroirs de scanneur, lors de l'illumination de contours d'éléments de construction et de surfaces d'éléments de construction.

27. Procédé de fonctionnement d'un dispositif présentant les caractéristiques de la revendication 1, **caractérisé par** le fait de prévoir plusieurs espaces de construction dans un boîtier de machine, le support de scanneur, déplaçable de façon motorisée à la façon d'un chariot à mouvements croisés, étant déplaçable entre les espaces de construction.

28. Procédé selon la revendication 27, **caractérisé en ce que** le dispositif d'alimentation en matériau est également déplaçable de façon motorisée sur la pluralité d'espaces de construction.

29. Procédé selon l'une des revendications précédentes 27 ou 28, **caractérisé en ce qu'**une pluralité de dispositifs d'alimentation en matériau est prévue, chaque fois un dispositif d'alimentation en matériau étant associé à un espace de construction.

30. Procédé selon l'une des revendications précédentes 27 - 29, **caractérisé en ce que** le revêtement d'une surface de construction, dans un espace de construction, se fait simultanément à l'illumination par le laser dans un autre espace de construction.

31. Procédé de fonctionnement d'un dispositif présentant les caractéristiques de la revendication 1, **caractérisé en ce que** le support de scanneur porte un palpeur universel mécanique ou électromécanique, dont la tête de palpage sert à l'installation de haute précision de composants, lors de la gravure au laser et/ou à l'installation d'éléments de construction préfabriqués dans un espace de construction.

32. Procédé de fonctionnement d'un dispositif présentant les caractéristiques de la revendication 1, **caractérisé par** l'aspiration de vapeurs de métaux, de fumée et d'éclats métalliques, pendant le fonctionnement du laser, au moyen d'un élément aspirant, en particulier de type annulaire, monté sur le support de scanneur, la zone d'aspiration étant l'objet d'un guidage de poursuite dans l'environnement direct du foyer laser, sur la surface d'éléments de construction.

33. Procédé de fonctionnement d'un dispositif présentant les caractéristiques de la revendication 1, **caractérisé par** l'insufflation de la poudre métallique à mettre en fusion, par du gaz inerte amené par l'intermédiaire d'un dispositif d'insufflation sur le support de scanneur, à proximité immédiate du foyer du laser, et une aspiration étant effectuée par l'intermédiaire du dispositif d'aspiration à proximité immédiate du foyer du laser.

34. Procédé de fonctionnement d'un dispositif présentant les caractéristiques de la revendication 1, **caractérisé en ce que**, sur le support de scanneur (8), respectivement sur le scanneur (4), est disposé un capteur d'espacement (37), à l'aide duquel on effectue une mesure d'espacement pendant l'usinage des éléments de construction.

35. Procédé de fonctionnement d'un dispositif présentant les caractéristiques de la revendication 1, **caractérisé en ce que**, sur le support de scanneur (8), respectivement sur le scanneur (4), est disposé un capteur d'espacement (37), à l'aide duquel on effectue une mesure d'espacement après l'usinage des éléments de construction.
